# EUROPÄISCHE PATENTSCHRIFT

(11) **EP 3 816 247 B1**
(45) Veröffentlichungstag und Bekanntmachung des Hinweises auf die Patenterteilung: **07.12.2022**
(21) Anmeldenummer: 20201701.8
(22) Anmeldetag: 14.10.2020
(51) Int. Cl.: C09D 183/04

(54) **HÄRTERMISCHUNG**
CURING MIXTURE
MÉLANGE DE DURCISSEUR

(30) Priorität: 28.10.2019 EP 19205611
(43) Veröffentlichungstag der Anmeldung: 05.05.2021
(73) Patentinhaber: Evonik Operations GmbH, 45128 Essen (DE)
(72) Erfinder: Hallack, Markus, 46514 Schermbeck (DE); Seyfried, Mona, 45130 Essen (DE); de Gans, Berend-Jan, 45478 Mülheim an der Ruhr (DE); Düllmann, Florian, 58099 Hagen (DE); Herrwerth, Sascha, 63579 Freigericht (DE)
(74) Vertreter: Evonik Patent Association

(56) Entgegenhaltungen:
- EP-A2- 1 464 675
- WO-A1-2004/020525
- WO-A1-2009/047580
- US-A1- 2005 059 772
- US-A1- 2008 251 200
- US-A1- 2016 208 050

## Beschreibung

Die vorliegende Erfindung betrifft eine Härtermischung für raumtemperaturhärtende Beschichtungen, wie z. B. Lacke, Farben, Tinten, Überzüge, Dichtungsmassen und Klebstoffe, deren Herstellungsverfahren und Anwendung.

Im Bereich der Farb- und Lackanwendungen sind seit langem Silikonharzzusammensetzungen als Bindemittel bekannt, die mittels eines Hydrolyse- und Kondensationsmechanismus zur Aushärtung gebracht werden können. Dies geschieht in der Regel mit einem Härter oder auch Vernetzer auf Basis von aminofunktionellen Alkoxysilanen.

Aminofunktionelle Alkoxysilanen, kurz Aminosilane genannt, werden unter anderem als Haftvermittler, als Vernetzer für härtbare Massen sowie als Aufbaukomponente von silanfunktionellen Polymeren eingesetzt. Am meisten verbreitet sind Aminosilane mit primären Aminogruppen ("primäre Aminosilane"); diese weisen aber einige Nachteile auf. Aufgrund der relativ hydrophilen primären Aminogruppe neigen sie zu Feuchtigkeitsaufnahme, was sich negativ auf die Lagerung und Verarbeitung auswirkt. So müssen sie unter Feuchtigkeitsausschluss gelagert werden und bei der Verarbeitung in Gänze verbraucht werden. Reste können üblicherweise nicht mehr eingesetzt werden.

Die Einsatzgebiete dieser aminofunktionellen Alkoxysilane erstrecken sich vom Witterungsschutz von Bauwerken über haftvermittelnde Eigenschaften in der Glasfaserindustrie, bei Dicht- und Klebstoffen, in Farben und Lacken bis hin zur Modifizierung von polymeren Werkstoffen. Ihr Wirkprinzip beruht auf der Bildung von Siloxanbindungen mit dem Untergrund. In Gegenwart von Luftfeuchtigkeit oder durch Zugabe von Wasser werden zunächst die Alkoxysubstituenten des Trialkoxysilans hydrolysiert und entsprechende Silanole gebildet. Diese Silanolgruppen können dann unter Abspaltung von Wasser mit Hydroxylgruppen auf der Oberfläche von den zu modifizierenden Werkstoff reagieren und über weitere Silanolgruppen unter Ausbildung von Siloxaneinheiten vernetzen.

Zur Beschleunigung solcher Vernetzungsreaktionen werden häufig Katalysatoren eingesetzt.

Die Verwendung von Aminosilanen als Additive in feuchtigkeitshärtenden Zusammensetzungen auf der Basis von silanfunktionellen Polymeren ist bekannt. Sie werden üblicherweise eingesetzt, um Eigenschaften wie Haftung, Lagerstabilität und Reaktivität gezielt zu beeinflussen, wie beispielsweise beschrieben in US 3,979,344, US 5,147,927 und EP 0 819 749A1.

US 6,703,453 offenbart feuchtigkeitshärtende Zusammensetzungen auf der Basis von silanfunktionellen Polymeren, welche unter anderem ein Addukt aus einem Aminosilan und Maleinsäure- oder Fumarsäure-Ester enthalten.

EP 2 013 305 offenbart eine feuchtigkeitshärtende Zusammensetzung auf der Basis eines silanfunktionellen Polymers und eines Reaktionsprodukt, hergestellt aus einem Aminosilan und einem Silangruppenfreien Alken, um deren Haftungseigenschaft zu verbessern.

US 2005/059772 A1, WO2009/047580 A1, US2008/251200 A1, WO2004/020525 A1 und EP 1464 675 A2 offenbaren je Zusammensetzungen auf Basis von hydroxylterminierten Polysiloxanen mit Guanidin(derivaten) als Vernetzungskatalysator und Aminopropyltrialkoxysilanen als Vernetzter oder Cokatalysator.

Um die Lagerstabilität derartiger Polymerzusammensetzung nicht zu beeinträchtigen bzw. um eine zu frühe, ungewollte Aushärtung zu verhindern, werden die Hauptbestandteile, nämlich die Polymerzusammensetzung und die Härterzusammensetzung, in voneinander getrennten Gebinden gelagert und sind jeweils für sich bei Raumtemperatur lagerstabil. Erst kurz vor oder während der Applikation werden die beiden Komponenten miteinander vermischt, worauf es zur Vernetzung bzw. zur Aushärtung der Polymerzusammensetzung kommt.

Nach dem heutigen Stand der Technik enthalten Härterzusammensetzungen oft Silikonpolymere als Extenderpolymer. Diese sind meist vinyl- oder trimethylsilylfunktionelle Polydimethylsiloxane. Die Verträglichkeit von beispielsweise Vernetzern oder Haftvermittlern mit diesen Polymeren ist nicht immer hinreichend gut, so dass das Risiko der Phasenseparation besteht. Zumeist werden solche Härterzusammensetzungen rheologisch stabilisiert, das heißt mit rheologisch aktiven Füllstoffen wird eine standfeste Paste formuliert, um eine allzu leichte Entmischung zu verhindern.

Separation einer flüssigen Phase an der Oberfläche ist bei vielen Härterzusammensetzungen hinreichend bekannt.

Der hier verwendete Begriff Separation beschreibt eine selbstständige Abtrennung von Komponenten in einem Stoffgemisch oder Zubereitung durch unzureichende Verträglichkeit oder unterschiedliche Dichte der Einzelkomponenten. Entsprechend der Dichte der separierenden Komponente(n) sind meist entweder Ansammlungen an der Oberfläche oder am Boden beobachtbar. Dieses Merkmal kann auch mit Hilfe des Begriffs der Homogenität, also der stofflichen Einheitlichkeit, beschrieben werden. Inhomogen sind demzufolge Mischungen oder Zubereitungen, bei denen sich eine vom Großteil der Masse unterscheidende Phase ausbildet. Dies kann beispielsweise die Separation einer öligen oder flüssigen Komponente sein. Bei flüssigen Stoffgemischen kann es sich um die sichtbare Ausbildung einer Phasengrenze zwischen unlöslichen oder unverträglichen Komponenten handeln.

Da in anwendungsfertigen, selbsthaftenden Zusammensetzungen üblicherweise Haftvermittlermengen von etwa 1% und Vernetzer in Mengen von ca. 3 - 5% benötigt werden, enthalten beispielsweise Härterzusammensetzungen für 2-Komponenten-Systeme für ein 9: 1-Mischungsverhältnis von Polymerzusammensetzung und Härter entsprechend die etwa 10-fache Konzentrationen in der Härterzusammensetzungen. Damit kommt das Problem der Phasenseparation einzelner Komponenten erst recht zum Tragen.

In WO 2010/057963 A1 wird eine Härterzusammensetzung offenbart, die vinylterminiertes Polydimethylsiloxan zur rheologischen Stabilisierung, wie beispielsweise Ruß und Kieselsäure, und darüber hinaus Vernetzer und Haftvermittler enthalten kann. Diese zusätzliche rheologische Stabilisierung kann die Separation von Bestandteilen der Härterzusammensetzung hinauszögern. Jedoch sind Ruß und Kieselsäure nicht für jede Beschichtung erwünscht.

In DE 32 06 474 A1 werden die Bestandteile der Härterzusammensetzung Alkylsilikat, Katalysator und Haftvermittler in einer vorherigen Reaktion umgesetzt, um die Verträglichkeit der Komponenten zu erreichen. Dies hat den Nachteil, dass ein aufwändiger, zusätzlicher, chemischer Prozess durchgeführt werden muss.

Aufgabe der vorliegenden Erfindung war daher die Bereitstellung von anwendungsfertigen Härterzusammensetzungen, die bei Lagerung homogen bleiben und keine Separation zeigen, ohne dass sie vorher in einem zusätzlichen Prozessschritt aufwändig chemisch umgesetzt wurden.

Diese Aufgabe wurde gelöst durch die erfindungsgemäße Härtermischung gemäß Anspruch 1.

Gegenstand der vorliegenden Erfindung ist daher eine Härtermischung für raumtemperaturhärtende Beschichtungen enthaltend
(A) 10 - 60 Gew.-%, bevorzugt 20 - 60 Gew.-%, besonders bevorzugt 30 - 50 Gew.-% eines Polysiloxans,
(B) 40 - 90 Gew.-%, bevorzugt 40 - 80 Gew.-%, besonders bevorzugt 40 - 70 Gew.-% eines aminofunktionellen Alkoxysilans und
(C) 1 - 10 Gew.-%, bevorzugt 2 - 7 Gew.-%, besonders bevorzugt 3 - 5 Gew.-% einer Guanidinverbindung,
wobei sich die Mengenangaben der Komponenten (A), (B) und (C) auf 100 Gew.-% ergänzen und sich auf die Härtermischung beziehen.

Die erfindungsgemäße Härtermischung hat den Vorteil, dass sie bei Lagerung homogen bleibt und keine Separation zeigt. Auch der Gebrauch von Härtermischung-Resten, trotz bereits geöffneter Gebinde, ist möglich.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sichtbar trübe oder inhomogen wird und sich in ihren Anwendungs- oder Gebrauchseigenschaften, insbesondere der Viskosität und der Vernetzungsgeschwindigkeit, durch die Lagerung in einem für ihren gebrauchsrelevanten Ausmaß verändert.

Als "Raumtemperatur" wird eine Temperatur von ca. 23 °C bezeichnet.

Es ist bekannt, dass bei einer Aushärtung durch Reaktion mit Luftfeuchtigkeit eine Polymerzusammensetzung von außen nach innen durchhärtet, wobei zunächst eine Haut an der Oberfläche der Zusammensetzung gebildet wird. Die sogenannte Hautbildungszeit stellt ein Maß für die Aushärtungsgeschwindigkeit der Zusammensetzung dar. Die Kondensation und die Stabilität von Aminosilanen und Polysiloxanen sowie Silikonharzen in Kontakt mit Luftfeuchtigkeit ist ein komplizierter Prozess, der von einer Vielzahl von Faktoren beeinflusst wird. Die erste Reaktion ist die Abspaltung von einem Molekül Alkanol - in der Regel Methanol oder Ethanol - durch die Reaktion mit einem Molekül Wasser. Die zweite Reaktion ist die Bildung einer Si-O-Si Bindung. In manchen Fällen ist die Reaktion mit Wasser die Geschwindigkeit bestimmenden Schritt, insbesondere in Situationen, wo die Luftfeuchtigkeit gering ist.

Niedrigmolekularen Aminosilane bilden in Kontakt mit der Luftfeuchtigkeit zuerst Di- und Oligomere, aber keine Haut, weil die Diffusion von den gebildeten Oligomeren im niedrigmolekularen Aminosilan weg von der Grenzfläche zu Luft viel schneller abläuft als die Reaktion mit Wasser. Im Gegensatz dazu ist die Diffusionsgeschwindigkeit bei hochmolekularen und viskosen Polysiloxanen, wie zum Beispiel Silikonharzen, langsamer als die Reaktion mit Wasser. Dadurch bildet sich in Kontakt mit Luftfeuchtigkeit eine Haut, bestehend aus durchvernetztem Material, und das Siloxan reagiert dann weiter bis zum Untergrund.

Nun wurde überraschenderweise gefunden, dass die erfindungsgemäßen Härtermischungen in Kontakt mit Luftfeuchtigkeit ebenfalls keine Haut bilden. Ohne an einer Theorie gebunden zu sein, wird vermutet, dass das niedrigviskose Aminosilan als Lösemittel für das hochmolekulare Polysiloxan wirkt und eine Diffusion weg von der Grenzfläche erlaubt, bevor eine Haut sich bilden kann.

Es wurde versucht, die Stabilität der erfindungsgemäßen Härtermischung anhand von Dimerenbildungen von Komponente (B) zu erklären. Offenbar konnte durch die erfindungsgemäßen Härtermischung die Dimerenbildung von Komponente (B) vermieden bzw. reduziert werden. Es wird hier auf die unten beschriebenen Beispiele verwiesen.

Vorzugsweise weist die Härtermischung ein Gewichtsverhältnis von Komponente A zu Komponente B von 1 : 9 bis 3 : 2 bevorzugt von 1 : 4 bis 3 : 2 und besonders bevorzugt 3 : 7 bis 3 : 2 auf.

Die erfindungsgemäße Härtermischung enthält bevorzugt als Komponente (A) eine Verbindung der allgemeinen Formel (I)

RₐSi(OR')_{b}O_{(4-a-b)/2} (I)

worin a und b unabhängig voneinander größer 0 bis kleiner gleich 2 sind und die Summe von a + b kleiner 4 ist und
R unabhängig voneinander, gleich oder verschieden lineare oder verzweigte, gesättigte wie auch ein oder mehrfach ungesättigte oder aromatische Kohlenwasserstoffreste,
R' eine Alkylgruppe bestehend aus 1 bis 8 Kohlenstoffatomen ist.

Bevorzugt sind die Reste R unabhängig voneinander gesättigte, verzweigte oder unverzweigte Alkylreste mit 1 bis 17 Kohlenstoffatomen und/oder ein oder mehrfach ungesättigte, verzweigte oder unverzweigte Alkenylreste mit 2 bis 17 Kohlenstoffatomen oder aromatische Gruppen mit 6 bis 12 Kohlenstoffatomen. Mehr bevorzugt weisen die Alkyl- und Alkenylreste bis zu 12, weiter bevorzugt bis zu 8 Kohlenstoffatome auf. Besonders bevorzugt sind alle Reste R gleich Methyl und/oder Phenyl.

Bevorzugte Reste R' sind Methyl-, Ethyl-, Propyl-, Isopropyl-, n-Butyl-, sek-Butyl- oder t-Butyl-Gruppen. Vorzugsweise ist R' ausgewählt aus Methyl- oder Ethylgruppen. Letztere eignen sich besonders für als HAPS-free (Hazardous Air Pollutant Substance) bezeichnete Phenylpolysiloxane oder Phenyl-Alkylpolysiloxane, die weder Lösemittel wie Toluol, Xylol oder Benzol enthalten und außerdem bei der bei Raumtemperatur stattfindenden katalytischen Hydrolyse-Kondensations-Vernetzung kein Methanol freisetzen, sondern nur Ethanol.

Verbindungen der Formel (I) werden häufig auch als Silikonharze bezeichnet. Bei dieser Formel handelt es sich um die kleinste Einheit der gemittelten Strukturformel des Silikonpolymers. Die Anzahl der Wiederholungen ergibt sich aus dem über GPC bestimmten Zahlenmittel Mn.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960) und wird auch in der deutschen Patentschrift DE 34 12 648 beschrieben.

Bevorzugte Verbindungen der allgemeinen Formel (I) weisen als Rest R Methyl- und/oder Ethylgruppen auf mit 3 bis 40 Gew.-% Alkoxyfunktionalität, bevorzugt 5 bis 35 Gew.-%, und besonders bevorzugt 7 bis 30 Gew.-%, bezogen auf die Gesamtmasse der Verbindung.

Das Molekulargewicht der Verbindung der allgemeinen Formel (I) ist bevorzugt Mw 100 bis 20.000 g/mol, mehr bevorzugt 200 bis 10.000 g/mol, weiter mehr bevorzugt 200 bis 3.000 g/mol, besonders bevorzugt 300 bis 2.000 g/mol.

Ganz besonders bevorzugt sind die Verbindungen der allgemeinen Formel (I) mit R gleich Methyl, sogenannte Methylsilikonharze, mit einer Alkoxyfunktionalität von 7 bis 35 Gew.-% bezogen auf die Gesamtmasse der Verbindung und einer gewichtsmittleren Molmasse von 300 bis 2.000 g/mol.

In einer weiteren bevorzugten Ausführungsform der erfindungsgemäßen Härtermischung handelt es sich bei Komponente (A) um Phenyl(alkoxysiloxane) bzw.Phenylsilikonharze mit R gleich Phenyl, sogenannte Phenylharze.

Bevorzugt weisen die Phenylharze einen Anteil der Alkoxygruppen von 1 - 40 Gew.-%, bezogen auf das Polysiloxan auf, besonders bevorzugt 3 - 35 Gew.-%, und ganz besonders bevorzugt 5 - 30 Gew.-% auf.

Weiterhin bevorzugt beträgt das Molekulargewicht Mw der Phenylharze 200 bis 10.000 g/mol, bevorzugt 200 bis 3.000 g/mol, besonders bevorzugt 300 bis 2.000 g/mol.

Besonders bevorzugt beträgt das Molekulargewicht Mw der Phenylharze 700 bis 2000 g/mol.

In einer weiteren bevorzugten Ausführungsform der erfindungsgemäßen Härtermischung handelt es sich bei Komponente (A) um eine Verbindung der allgemeinen Formel (I) worin R Phenyl- und Methylgruppen sind.

Besonders bevorzugte Methyl-Phenylharze weisen als Alkoxygruppen Methoxy- und/oder Ethoxy-Gruppen auf, wobei der Anteil der Alkoxygruppen, insbesondere der Methoxy- bzw. Ethoxy-gruppen, mindestens 3 Gew.-%, bezogen auf das Polysiloxan, vorzugsweise 1 bis 40 Gew.-%, besonders bevorzugt 3 bis 35 Gew.-%, und ganz besonders bevorzugt 5 bis 30 Gew.-% beträgt.

Das numerische auf die Molzahl im Harz bezogene Phenyl- zu Methyl-Verhältnis liegt bevorzugt in der Regel im Bereich von 1 zu 0,1 bis 0,1 zu 1, vorzugsweise im Bereich von 0,5 zu 1 bis 1 zu 0,5.

Weiterhin enthält die erfindungsgemäße Härtermischung bevorzugt als Komponente (B) ein aminofunktionelles Alkoxysilan der allgemeinen Formel (II)

R¹₂-N-R³-SiR¹ₓ(OR²)₃₋ₓ (II)

wobei
R¹ gleich oder unabhängig voneinander Wasserstoff, eine Alkyl-, iso-Alkyl-, tert. Alkyl-, Cycloalkyl- oder Arylgruppe mit 1 - 10 Kohlenstoffatomen, NH₂-(CH₂)₂- oder (R²O)₃Si-R³- und
R² unabhängig voneinander Wasserstoff, eine Alkyl- oder iso-Alkylgruppe mit 1 - 8 Kohlenstoffatomen bedeuten und
R³ eine lineare oder verzweigte Alkylengruppe mit 1 - 20 Kohlenstoffatomen ist und x = 0, 1 oder 2.

Bevorzugt ist R¹ eine n-Butylgruppe, eine NH₂-(CH₂)₂- oder (R²O)₃Si-R³- Gruppe.

Bevorzugte Alkylgruppen des Restes R² sind Methyl-, Ethyl-, Propyl-, Isopropyl-, n-Butyl-, sek-Butyl-, t-Butyl-Gruppen.

Bevorzugt ist R³ eine Butyl-, Propyl-, Ethyl- oder Methylengruppe.

Als "sekundäres Aminosilan" wird ein aminofunktionelles Alkoxysilan bezeichnet, dessen direkt an das Silicium-Atom gebundener Rest mindestens eine sekundäre Aminogruppe aufweist. Als "primäres Aminosilan" wird ein aminofunktionelles Alkoxysilan bezeichnet, dessen direkt an das Silicium-Atom gebundener Rest mindestens eine primäre Aminogruppe aufweist.

Als "aminofunktionelles Alkoxysilan" oder kurz "Aminosilan" wird eine siliciumhaltige Verbindung bezeichnet, in der das Silicium-Atom sowohl mindestens einen, insbesondere zwei oder drei, Alkoxygruppen, als auch einen direkt gebundenen organischen Rest trägt und somit mindestens eine Si-C-Bindung aufweist. Als "Silylgruppe" wird die an den organischen Rest eines aminofunktionellen Alkoxysilans gebundene siliciumhaltige Gruppe bezeichnet.

Als "primäre Aminogruppe" wird eine NH₂-Gruppe bezeichnet, die an einen organischen Rest gebunden ist, als "sekundäre Aminogruppe" wird eine NH-Gruppe bezeichnet, die an zwei organische Reste, welche auch gemeinsam Teil eines Rings sein können, gebunden ist, und als ,,tertiäre Aminogruppe" wird eine Aminogruppe bezeichnet, deren Stickstoffatom ("tertiärer Amin-Stickstoff") an drei organische Reste gebunden ist, wobei zwei dieser Reste auch gemeinsam Teil eines Rings sein können.

Als "feuchtigkeitshärtend" wird eine härtbare Masse bezeichnet, bei welcher ein Silylgruppen aufweisendes ("silylfunktionelles") Polymer vorwiegend über die Reaktion der Silylgruppen mit atmosphärischem Wasser ausgehärtet werden kann.

Solche Aminosilane gemäß Formel (II) sind vorzugsweise ausgewählt aus 3- Aminopropyltrimethoxysilan, 3- Aminopropyltriethoxysilan, 2- Aminoethyl- 3- Aminopropyltr imethoxysilan, 3- Aminopropyl(diethoxymethoxysilan), 3- Aminopropyl(tripropoxysilan), 3- Am inopropyl(dipropoxymethoxysilan), 3- Aminopropyl(tridodecanoxysilan), 3- Aminopropyl (tritet radecanoxysilan), 3- Aminopropyl(trihexadecanoxysilan), 3- Aminopropyl(trioctadecanoxysila n), 3- Aminopropyl(didodecanoxy)tetradecanoxysilan, 3- Aminopropyl(dodecanoxy)tetradeca noxy(hexadecanoxy)silan, 3- Aminopropyl(dimethoxymethylsilan), 3- Aminopropyl(methoxydi methylsilan), 3- Aminopropyl(hydroxydimethylsilan), 3- Aminopropyl(diethoxymethylsilan), 3-Aminopropyl(ethoxydimethylsilan), 3- Aminopropyl(dipropoxymethylsilan), 3- Aminopropyl(pr opoxydimethylsilan), 3- Aminopropyl(diisopropoxymethylsilan), 3- Aminopropyl(isopropoxydi methylsilan), 3- Aminopropyl(dibutoxymethylsilan), 3- Aminopropyl(butoxydimethylsilan), 3- A minopropyl(disiobutoxymethylsilan), 3- Aminopropyl(isobutoxydimethylsilan), 3- Aminopropyl( didodecanoxymethylsilan), 3- Aminopropyl(dodecanoxydimethylsilan), 3- Aminopropyl(ditetra decanoxymethylsilan), 3- Aminopropyl(tetradecanoxydimethylsilan), 2- Aminoethyl(trimethox ysilan), 2- Aminoethyl(triethoxysilan), 2- Aminoethyl(diethoxymethoxysilan), 2- Aminoethyl(tri propoxysilan), 2-Aminoethyl(dipropoxymethoxysilan), 2-Aminoethyl(tridodecanoxysilan), 2- Aminoethyl(tritetradecanoxysilan), 2- Aminoethyl(trihexadecanoxysilan), 2- Aminoethyl(trio ctadecanoxysilan), 2- Aminoethyl(didodecanoxy)tetradecanoxysilan, 2- Aminoethyl(dodecan oxy)tetradecanoxy(hexadecanoxy)silan, 2- Aminoethyl(dimethoxymethylsilan), 2- Aminoethyl (methoxydimethylsilan), 2- Aminoethyl(diethoxymethylsilan), 2- Aminoethyl(ethoxydimethylsil an), 1- Aminomethyl(trimethoxysilan), 1- Aminomethyl(triethoxysilan), 1- Aminomethyl(dietho xymethoxysilan), 1- Aminomethyl(dipropoxymethoxysilan), 1- Aminomethyl(tripropoxysilan), 1- Aminomethyl(trimethoxysilan), 1- Aminomethyl(dimethoxymethylsilan), 1- Aminomethyl (methoxydimethylsilan), 1- Aminomethyl(diethoxymethylsilan), 1- Aminomethyl(ethoxydimeth ylsilan), 3- Aminobutyl(trimethoxysilan), 3- Aminobutyl(triethoxysilan), 3- Aminobutyl(diethoxy methoxysilan), 3-Aminobutyl(tripropoxysilan), 3-Aminobutyl(dipropoxymethoxysilan), 3-Aminobutyl(dimethoxymethylsilan), 3- Aminobutyl(diethoxymethylsilan), 3- Aminobutyl(dimet hylmethoxysilan), 3-Aminobutyl(dimethylethoxysilan), 3-Aminobutyl(tridodecanoxysilan), 3-Aminobutyl(tritetradecanoxysilan), 3- Aminobutyl(trihexadecanoxysilan), 3- Aminobutyl(didod ecanoxy)tetradecanoxysilan, 3-Aminobutyl(dodecanoxy)tetra-decanoxy(hexadecanoxy)silan, 3-Amino-2-methyl-propyl(trimethoxysilan), 3-Amino-2-methyl-propyl(triethoxysilan), 3-Amino-2-methyl-propyl(diethoxymethoxysilan), 3-Amino-2-methyl-propyl(tripropoxysilan), 3-Amino-2-methylpropyl(dipropoxymethoxysilan), 3-Amino-2-methyl-propyl(tridodecanoxysilan), 3-Amino-2-methylpropyl(tritetradecanoxysilan), 3-Amino-2-methylpropyl(trihexadecanoxysilan), 3- Amino- 2- methyl- propyl(trioctadecanoxysilan), 3- Amino- 2- methyl- propyl(didodecanoxy )tetradecanoxysilan, 3- Amino- 2- methylpropyl(dodecanoxy)tetradecanoxy(hexadecanoxy)sil an, 3- Amino- 2- methylpropyl(dimethoxymethylsilan), 3- Amino- 2- methyl- propyl(methoxydi methylsilan),3- Mercapto- 2- methyl- propyl(diethoxymethylsilan), 3- Mercapto- 2- methylprop yl(ethoxydimethylsilan), 3-Mercapto-2-methyl-propyl(dipropoxymethylsilan), 3-Amino-2-methyl-propyl(propoxydimethylsilan), 3-Amino-2-methylpropyl(diisopropoxymethylsilan), 3-Amino-2-methyl-propyl(isopropoxydimethylsilan), 3-Amino-2-methylpropyl(dibutoxymethylsilan), 3-Amino-2-methylpropyl(butoxydimethylsilan), 3-Amino-2-methyl-propyl(diisobutoxymethylsilan), 3-Amino-2-methyl-propyl(isobutoxydimethylsilan), 3-Amino-2-methylpropyl(didodecanoxymethylsilan), 3-Amino-2-methylpropyl(dodecanoxy-dimethylsilan), 3-Amino-2-methyl-propyl(ditetradecanoxymethylsilan) oder 3-Amino-2-methylpropyl(tetradecanoxydimethyl-silan), triaminofunktionelles Propyltrimethoxysilan, Bis(3-trimethoxysilylpropyl)-amin, Bis(3-triethoxysilylpropyl)-amin, N-Benzyl-N-(2-aminoethyl)-3-aminopropyltrimethoxysilan- Hydrochlorid, N- Benzyl- N- (2- aminoethyl)- 3- aminopropyltrim ethoxysilanacetat (Salz), N- (n- Butyl)- 3- aminopropyltrimethoxysilan, 3- Aminopropylmethyl diethoxysilan, N-Vinylbenzyl-N-(2-aminoethyl)-3-aminopropylpolysiloxan und N-(2-Aminoethyl)-3-aminopropylmethyldimethoxysilan.

Besonders bevorzugt werden 3-Aminopropyltrimethoxysilan (DYNASYLAN^{®} AMMO), 3-Aminopropyltriethoxysilan (DYNASYLAN^{®} AMEO), 3-Aminopropylmethyldiethoxysilan (DYNASYLAN^{®} 1505), N-(n-Butyl)-3-aminopropyltrimethoxysilan (DYNASYLAN^{®} 1189), N-(2- Aminoethyl)- 3- aminopropyltrimethoxysilan (DYNASYLAN^{®} DAMO), (H₃CO)₃Si(CH₂)₃NH (CH₂)₃Si(OCH₃)₃ (DYNASYLAN^{®} 1124),(H₅C₂O)₃Si(CH₂)₃NH(CH₂)₃Si(OC₂H₅)₃ (DYNASYLA N^{®} 1122), jeweils der Fa. Evonik Industries AG, als Komponente (B) eingesetzt.

Es ist vorstellbar, dass Komponente (B) mit einem Dimerengehalt zwischen 0,01 - 20 mol%, bevorzugt 0,1 - 10 mol%, bezogen auf die gesamte Menge an Siliziumatomen der Komponente (B), für die erfindungsgemäße Härtermischung geeignet ist.

Als Komponente (C) enthält die erfindungsgemäße Härtermischung bevorzugt eine Guanidinverbindung der allgemeinen Formel (III) 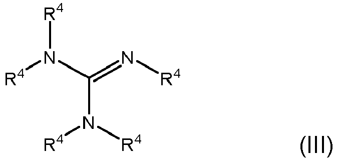 worin
R⁴ unabhängig voneinander gleich oder verschieden Wasserstoff, lineare oder verzweigte oder cyclische Kohlenwasserstoffe enthaltend 1 bis 15 Kohlenstoffatome, wobei die Kohlenwasserstoffe auch 1 oder 2 Heteroatome enthalten können.

Bevorzugte Heteroatome sind Stickstoff und Sauerstoff.

Es ist vorstellbar, Komponente (C) auch in Kombination mit den anderen Katalysatoren einzusetzen. Bevorzugte Katalysatoren sind Zinn-Verbindungen wie Zinndiacetat, Zinndioctoat, Dibutylzinndiacetylacetonat, Dibutylzinndilaurat, Zinn Tetraacetat, Dibutylzinndiacetat, Dibutylzinndioctoat, Dibutylzinndioleat, Dimethoxydibutylzinn, Dibutylzinnbenzylmaleat, Bis (triethoxysiloxy)dibutylzinn, Diphenylzinndiacetat. Ebenfalls bevorzugt sind Titanverbindungen wie Tetraethylorthotitanate, Tetra-n-propylorthotitanate, Tetraisopropylorthotitanate, Tetra-n-butylorthotitanate, Tetraisobutylorthotitanate, Tetrakis-(2-ethylhexyl)orthotitanate, Titanium(IV)diisopropoxide-bis-(ethylacetoacetat), Titanium(IV) dipropoxide-bis-(acetylacetonat), Titanium(IV)diisopropoxide-bis-(acetylacetonat), Titanium(IV)dibutoxide-bis-(acetylacetonat), Tetrakis(2-Ethylhexan-1,3-diolato)Titanium oder Titanium(IV) Oxyacetylacetonat. Weiterhin bevorzugt sind Metallo aliphatischen Verbindungen, wie Bleidiacetat, Blei-di-2-ethylhexanoat, Blei-dineodecanoat, Bleitetraacetat, Bleitetrapropionat, Zinkacetylacetonat, Zink-2-ethylcaproat, Zink-diacetat, Bis-(2-Ethylhexansäure)-Zink, Zink-Dineodecanoat, Zinkdiundecenoat, Zinkdimethacrylat, Zirconium-Tetra-2-Ethylhexanoat, Zirconium-Tetra-Methacrylat und Kobalt-diacetat. Des Weiteren können auch Bismutkatalysatoren, z.B. der sogenannte Borchi-Katalysator, Eisen(II)- und Eisen(III)-Verbindungen, z. B. Eisen(III)-acetylacetonat oder Eisen(II)-acetat, Aluminiumverbindungen, z. B. Aluminiumacetylacetonat, Calcium-verbindungen, z.B. Calciumethylendiamintetraacetat, Magnesiumverbindungen, z. B. Magnesiumethylendiamintetraacetat als Katalysatoren
eingesetzt werden.

Bevorzugt weist die erfindungsgemäße Härtermischung als Komponente (C) 1,1,3,3-Tetramethylguanidin oder 2-tert-Butyl-1,1,3,3-Tetramethylguanidin auf.

Vorzugsweise weist die erfindungsgemäße Härtermischung eine Viskosität, gemessen nach DIN 53019, zwischen 5 und 25 mPa.s, bevorzugt 7 - 20 mPa.s, besonders bevorzugt 8 - 15 mPa.s auf.

Ein weiterer Gegenstand der Erfindung ist ein Verfahren zur Herstellung der erfindungsgemäßen Härtermischung, wobei die Komponenten (A), (B) und (C) unter Stickstoff vermischt werden.

Vorzugsweise wird zunächst Komponente (A) vorgelegt und unter ständigem Rühren Komponente B zugegeben. Die Rührgeschwindigkeit soll vorteilhafterweise so ausgewählt sein, dass eine Hautbildung vermieden wird. Anschließend wird bevorzugt Komponente (C) hinzugefügt. Bei der Zugabe von Komponente (C) soll die Rührgeschwindigkeit ebenfalls beachtet werden, damit es nicht zu einer kurzzeitigen, lokalen Überkonzentration der Komponente (C) in der Mischung von Komponenten (A) und (B) kommt.

Auch ist die Verwendung der erfindungsgemäßen Härtermischung zur Härtung von härtbaren Zusammensetzungen enthaltend mindestens ein Polymer, das silylfunktionell ist, ein weiterer Gegenstand der Erfindung.

Silylfunktionell im Sinne der vorliegenden Erfindung bedeutet, dass im Polymer Alkylgruppen oder Wasserstoffatome über Sauerstoff an Silicium gebunden vorliegen (Si-O-R-Gruppen). Im Rahmen der vorliegenden Erfindung werden synonym auch Silanolgruppen (Si-OH-Gruppen) verstanden. Vorzugsweise bedeutet silylfunktionell die Anwesenheit von Si-O-R-Gruppen.

Vorstellbar sind Polymere ausgewählt aus silylfunktionellen Polyethern, silylfunktionellen Acrylaten und Methacrylaten, und silylfunktionellen Polyestern. Handelsübliche, silylfunktionellen Polyethern sind unter den Markennamen Tegopac^{®} und Albidur^{®} (Fa. Evonik Industries), Geniosil^{®} (Fa. Wacker) und Polymer MS^{®} (Fa. Kaneka) erhältlich.

Es ist auch möglich die erfindungsgemäße Härtermischung zur Härtung von härtbaren Zusammensetzungen enthaltend mindestens ein Polymer, das zusätzlich epoxyfunktionell ist, zu verwenden. Solche epoxyfunktionellen Polymeren sind unter den Markennamen Silikopon^{®} (Fa. Evonik Industries) erhältlich.

Vorteilhafterweise und ebenso erstaunlicherweise konnte festgestellt werden, dass Komponente (B) in der erfindungsgemäße Härtermischung zunächst nicht als Vernetzer wirkt. Erst durch die Zugabe der erfindungsgemäßen Härtermischung in einer härtbaren Zusammensetzung entfaltet sich die Härtereigenschaft der erfindungsgemäßen Härtermischung. Bei der Anwendung sollte darauf geachtet werden, dass die Menge an Härter (Komponente (B)) üblicherweise im Bereich von 4 - 20 Gew.-% und die Menge an Katalysator (Komponente (C)) üblicherweise im Bereich von 0,2 - 1,0 Gew.-% für die Aushärtung der härtbaren Zusammensetzung liegt. Entsprechend kann die Menge der erfindungsgemäßen Härtermischung dosiert werden.

Ohne an einer Theorie gebunden zu sein, wird angenommen, dass die Viskosität der erfindungsgemäßen Härtermischung möglicherweise auch eine Rolle für deren Stabilität spielen könnte. Es wurde beobachtet, dass Komponente (B) in der erfindungsgemäßen Härtermischung mit einer relativ niedrigen Viskosität keine Härtereigenschaft aufweist; in einer härtbaren Zusammensetzung, die eine höhere Viskosität aufweist, konnte festgestellt werden, dass die Härtereigenschaft von Komponente (B) zum Tragen kommt.

Es ist daher bevorzugt auch möglich, dass Komponente (A) gemäß der Verbindung der allgemeinen Formel (I) als härtbare Zusammensetzung einzusetzen.

Dem Fachmann ist bekannt, dass härtbare Zusammensetzungen weitere Zusatzstoffe, wie z. B. Füllstoffe, Pigmente, Lösungsmitteln, Verdickungsmitteln und/oder Reaktivverdünner, enthalten können. Somit können weitere zweckdienliche Zusatzstoffe hinzugefügt werden.

Bevorzugte Zusätze der härtbaren Zusammensetzungen können ausgewählt sein aus der Gruppe der Verdünner, Weichmacher, Füllstoffe, Lösungsmittel, Emulgatoren, Haftvermittler, Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Korrosionsschutzmittel, Fungizide, Reaktivverdünner Komplexbildner, Netzmittel, co-Vernetzer, Sprühhilfsmittel, pharmakologische Wirkstoffe, Duftstoffe, Radikalfänger und/oder andere Zuschlagstoffe.

Geeignete Lösungsmittel können ausgewählt sein aus der Gruppe der Alkane, Alkene, Alkine, Benzol und Aromaten mit aliphatischen und aromatischen Substituenten, die wiederum auch einfach- oder mehrfach substituiert sein können, Carbonsäureester, lineare und cyclische Ether, völlig symmetrisch gebaute Moleküle, wie Tetramethylsilan oder analog Kohlenstoffdisulfid und bei hohen Drücken auch Kohlenstoffdioxid, halogenierte aliphatische oder aromatische Kohlenwasserstoffe, Ketone oder Aldehyde, Lactone wie beispielsweise γ-Butyrolacton, Lactame wie beispielsweise N-Methyl-2-pyrrolidon, Nitrile, Nitroverbindungen, tertiäre Carbonsäureamide wie beispielsweise N,N-Dimethylformamid, Harnstoffderivate wie Tetramethylharnstoff oder Dimethylpropylenharnstoff, Sulfoxide wie Dimethylsulfoxid, Sulfone wie Sulfolan, Kohlensäureester wie Dimethylcarbonat, Ethylencarbonat oder Propylencarbonat. Auch seien protische Lösungsmittel genannt wie Butanol, Methanol, Ethanol, n- und Isopropanol, und andere Alkohole, primäre und sekundäre Amine, Carbonsäuren, primäre und sekundäre Amide wie Formamid sowie Mineralsäuren.

Geeignete Füllstoffe können ausgewählt sein aus anorganischen Pigmenten wie z.B. Metalloxiden (wie z.B. Titandioxid) oder Spinellpigmenten; plättchenförmigen Micapigmenten (Glimmer).

Geeignete Korrosionschutzmittel sind z.B. Zinkphoshate.

Auch sind Beschichtungen, Lacke, Farben, Tinten, Überzüge, Dichtungsmassen und Klebstoffe erhältlich durch Verwendung der erfindungsgemäßen Härtermischungen Gegenstand der Erfindung.

Die erfindungsgemäßen Härtermischungen werden nachfolgend beispielhaft beschrieben, ohne dass die Erfindung auf diese beispielhaften Ausführungsformen beschränkt sein soll.

### Methoden

### Kernspinnresonanz (NMR)

NMR-Spektren wurden gemessen mit Hilfe eines Avance III 400 Spektrometer von der Fa. Bruker. ²⁹Si-NMR Spektren wurden gemessen mit einem PA BBO 400Si BB-H-D-10 z Probenkopf der Fa. Bruker, bei einer Frequenz von 79,495 MHz. Die Messzeit betrug 2,569 Sekunde pro Scan, bei 512 Scans pro Spektrum.

### Hautbildung

Hautbildung auf der Oberfläche eines geöffneten Glases mit Härtermischung wurde sowohl visuell als mit Hilfe eines Spatels beurteilt. Proben wurden in 3 Kategorien eingeteilt:
0 - Keine Haut- oder Ringbildung
1 - Ringbildung (entlang der Glaswand an der Grenzfläche Härtermischung zu Luft)
2 - Hautbildung

### Viskositätsmessungen

Viskositäten wurden angelehnt an DIN 53019 mit einem MR301 Rheometer der Fa. Anton Paar mit Platte-Kegel Geometrie, bei einer Scherung von 100 s⁻¹ und einer Temperatur von 25 °C gemessen.

### Trockenzeitmessungen

Die Trockenzeit wurde angelehnt an der ASTM D5895 mit einem Trockenzeitmessgerät bestimmt. Standardglasstreifen (30 x 2,5 x 0,2 cm) wurden mit einer Ethanol/VE-Wasser-Mischung von Staub-, Schmutz- und Fettanhaftungen befreit. Mittels eines Kastenrakels wurden Lackfilme mit 100 µm Naßschichtdicke aufgetragen. Es wurde sodann der Schieber mittels eines Hebels auf der Rückseite, nach links in Startposition verschoben. Dann wurden die Ritznägel auf die Probenglasplatten runtergeklappt. Die Prüfdauer wurde auf 6, 12 bzw. 24 Stunden eingestellt und die Messung gestartet. Nach Ablauf der Prüfdauer wurden die Ritznägel hochgeklappt und die Glasplatten zur Beurteilung herausgenommen.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden in den nachfolgenden Beispielen Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Materialien und Geräte

- Dynasylan^{®} AMEO (3-Aminopropyltriethoxysilan), Fa. Evonik Industries
- Dynasylan^{®} AMMO (3-Aminopropyltrimethoxysilan), Fa. Evonik Industries
- Phenyltrichlorsilan, Fa. Sigma-Aldrich
- Decamethylcyclopentasiloxan, Fa. Sigma-Aldrich
- Methanol, Fa. Reininghaus Chemie
- Silikophen AC900 (methoxyfunktionelles Silikonharz), Fa. Evonik Industries
- Silikophen AC1000 (methoxyfunktionelles Silikonharz), Fa. Evonik Industries
- 1,1,3,3-Tetramethylguanidin, Fa. Sigma-Aldrich
- Xylol, Fa. Brenntag
- Bentone SD 1 (Rheologieadditiv auf Basis Bentonit), Fa. Elementis
- Mica TM (lamellarer Füllstoff auf Basis Muscovit), Fa. Aspanger
- Heucophos ZPO (Korrosionsschutzpigment auf Basis Zinkphosphat), Fa. Heubach
- Heucodur Black 9-100 (Schwarzpigment auf Basis Magnetit), Fa. Heubach
- Aerosil R972 (oberflächenmodifizierte pyrogene Kieselsäure), Fa. Evonik Industries
- Plastorit Super (Füllstoff auf Basis Leukophyllit), Fa. Imerys Performance Additives
- Butylglykolacetat, Fa. Reininghaus Chemie
- 100µm - Kastenrakel, Fa. Erichsen
- Standard Glasstreifen, Fa. Gläserei Glänzer
- Dispermat, Fa. VMA Getzmann
- 2,2 mm Glasperlen, Fa. Sigmund Lindner
- BK3 drying recorder, The Mickle Laboratory Engineering

### Beispiele

### 1. Herstellung von erfindungsgemäßen Härtermischungen

Für die Herstellung der erfindungsgemäßen Härtermischungen wird ein Methylphenylsilikonharz gemäß dem Verfahren beschrieben in der DE 34 12 648 durch Kondensation von Phenyltrichlorsilan und Decamethylcyclopentasiloxan mit Wasser und Methanol hergestellt. Das Methylphenylsilikonharz, im Weiteren MP-Harz genannt, hat ein Phenyl- zu Methylverhältnis von 0,97 zu 1, ein Methoxygehalt von 15,6 Gew.-% und eine Viskosität von 183 mPa.s.

In einem 30 mL Schraubdeckelglas wurden gemäß den Angaben aus Tabelle 1 zuerst Komponente (A) vorlegt. Anschließend wurde unter Rühren bei 1,000 UpM mit einem Dispermaten der Firma VMA Getzmann Komponente (B) hinzugefügt. Anschließend wurde 3 Minuten bei 1,000 UpM homogenisiert. Als letztes wurde unter Rühren bei 1,000 UpM Komponente (C) zugegeben, und anschließend 3 Minuten bei 1,000 UpM homogenisiert. Als Komponente (C) wurde 1,1,3,3-Tetramethylguanidin (TMG) verwendet. H1 - H12 sind erfindungsgemäße Härtermischungen. VG1 - VG7 sind nicht erfindungsgemäße Vergleichsbeispiele.

**Tabelle 1: Zusammensetzung der Härtermischungen**

| **Härtermischung** | **Komponente (A)** | **Komponente (B)** | **Menge (A) Gew.-%** | **Menge (B) Gew.-%** | **(A):(B)** | **Menge (C) Gew.-%** |
|---|---|---|---|---|---|---|
| H1 | Silikophen AC1000 | Dynasylan AMMO | 9,57 | 86,13 | 1:9 | 4,30 |
| H2 | Silikophen AC1000 | Dynasylan AMMO | 19,14 | 76,56 | 1:4 | 4,30 |
| H3 | Silikophen AC1000 | Dynasylan AMMO | 28,71 | 66,99 | 3:7 | 4,30 |
| H4 | Silikophen AC1000 | Dynasylan AMMO | 38,28 | 57,42 | 2:3 | 4,30 |
| H5 | Silikophen AC1000 | Dynasylan AMMO | 47,85 | 47,85 | 1:1 | 4,30 |
| H6 | Silikophen AC1000 | Dynasylan AMMO | 57,42 | 38,28 | 3:2 | 4,30 |
| H7 | MP-Harz | Dynasylan AMEO | 9,57 | 86,13 | 1:9 | 4,30 |
| H8 | MP-Harz | Dynasylan AMEO | 19,14 | 76,56 | 1:4 | 4,30 |
| H9 | MP-Harz | Dynasylan AMEO | 28,71 | 66,99 | 3:7 | 4,30 |
| H10 | MP-Harz | Dynasylan AMEO | 38,28 | 57,42 | 2:3 | 4,30 |
| H11 | MP-Harz | Dynasylan AMEO | 47,85 | 47,85 | 1:1 | 4,30 |
| H12 | MP-Harz | Dynasylan AMEO | 57,42 | 38,28 | 3:2 | 4,30 |
| VG1 | Silikophen AC1000 | Dynasylan AMMO | 66,99 | 28,71 | 7:3 | 4,30 |
| VG2 | Silikophen AC1000 | Dynasylan AMMO | 76,56 | 19,14 | 4:1 | 4,30 |
| VG3 | Silikophen AC1000 | Dynasylan AMMO | 86,13 | 9,57 | 9:1 | 4,30 |
| VG4 | MP-Harz | Dynasylan AMEO | 66,99 | 28,71 | 7:3 | 4,30 |
| VG5 | MP-Harz | Dynasylan AMEO | 76,56 | 19,14 | 4:1 | 4,30 |
| VG6 | MP-Harz | Dynasylan AMEO | 86,13 | 9,57 | 9:1 | 4,30 |
| VG7 | - | Dynasylan AMEO | - | 95,70 | - | 4,30 |

### 1.1 Stabilitätsbewertung

Das 30 mL Schraubdeckelglas wurde zunächst visuell auf Trübung untersucht. Eine trübe Probe wurde als instabil gewertet. Anschließend wurde das Schraubdeckelglas geöffnet und bei 23 °C und ca. 40% Luftfeuchtigkeit stehen gelassen. Nach 24 Stunden wurde die Stabilität gemäß o.g. Skala beurteilt. Die Ergebnisse der Stabilitätsbewertung sind in Tabelle 2 dargestellt.

**Tabelle 2: Stabilität der Härtermischungen**

| **Härtermischung** | **Stabilitätsbewertung, direkt nach Herstellung** | **Stabätitäsbewertung, nach 24h** |
|---|---|---|
| H1 | Klar | 0 |
| H2 | Klar | 0 |
| H3 | Klar | 0 |
| H4 | Klar | 0 |
| H5 | Klar | 0 |
| H6 | Klar | 0 |
| H7 | Klar | 0 |
| H8 | Klar | 0 |
| H9 | Klar | 0 |
| H10 | Klar | 0 |
| H11 | Klar | 0 |
| H12 | Klar | 0 |
| VG1 | Klar | 1 |
| VG2 | Trübe | 2 |
| VG3 | Trübe | 2 |
| VG4 | Klar | 1 |
| VG5 | Klar | 2 |
| VG6 | Klar | 2 |
| VG7 | Klar | Weißer Niederschlag |

Es konnte festgestellt werden, dass die erfindungsgemäßen Härtermischungen keine Trübungen aufweisen und nach 24 Stunden bei geöffneter Lagerung stabil blieben. Es fand keine Separation, Hautbildung oder Bildung eines Niederschlages statt. Die erfindungsgemäßen Härtermischungen sind homogen.

### 1.2 Viskositätsentwicklung

In einem weiteren Experiment wurde die Viskositätsentwicklung betrachtet. Die erfindungsgemäßen Härtermischungen wurden analog dem erfindungsgemäßen Verfahren wie oben beschrieben gemäß den Mengenangaben aus Tabelle 1 hergestellt. Die hergestellte Härtermischungen wurden in geschlossenen 30 mL Schraubdeckelgläser bei 40 °C gelagert und deren Viskosität gemäß den Zeitangaben aus Tabellen 3 und 4 bestimmt.

**Tabelle 3: Viskositätsentwicklung (mPa.s) bei 40 °C Lagerung, geschlossen**

| **Wochen** | **H5** | **H11** |
|---|---|---|
| 0 | 9 | 10 |
| 1 | 9 | 10 |
| 2 | 9 | 10 |
| 4 | 8 | 11 |
| 8 | 9 | 11 |
| 16 | 9 | 10 |

Es konnte festgestellt werden, dass die Viskosität der erfindungsgemäßen Härtermischungen annähernd konstant bleibt.

### 1.3 Stabilitätsbewertung anhand der Dimerenbildung von Dynasylan AMEO (Komponente (B))

Es wurde eine erfindungsgemäße Härtermischung gemäß Tabelle 6 hergestellt, die hälftig in zwei 30 mL Schraubdeckelgläschen verteilt wurden, D1 und D2. D2 wurde für eine Stunde bei Raumtemperatur eine Luftfeuchtigkeit von 40% ausgesetzt. D1 wurde sofort geschlossen. Analog wurden VD1 und VD2 hergestellt und der Textbedingung ausgesetzt, wobei hier Komponente (A) fehlt. Bei Dynasylan AMEO wurde eine originalverschlossene Charge eingesetzt.

**Tabelle 5: Zusammensetzung Proben für ²⁹Si-NMR**

| **Probenname** | **MP-Harz Gew.-%** | **Dynasylan AMEO Gew.-%** | **Tetramethylguanidin Gew.-%** | **Luftfeucitigkeit:** |
|---|---|---|---|---|
| VD 1 | - | 97,0 | 3,0 | Nein |
| VD 2 | - | 97,0 | 3,0 | Ja |
| D1 | 50,0 | 47,0 | 3,0 | Nein |
| D2 | 50,0 | 47,0 | 3,0 | Ja |

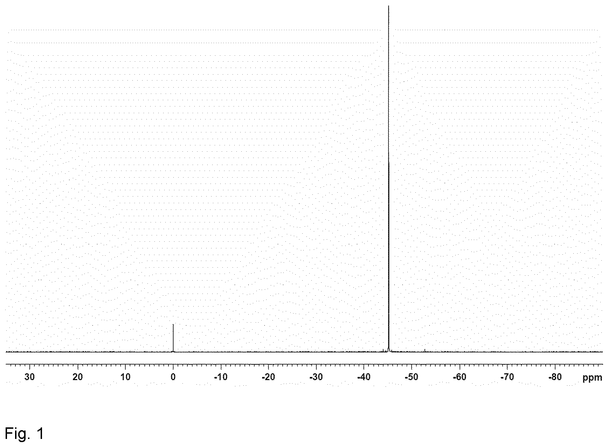

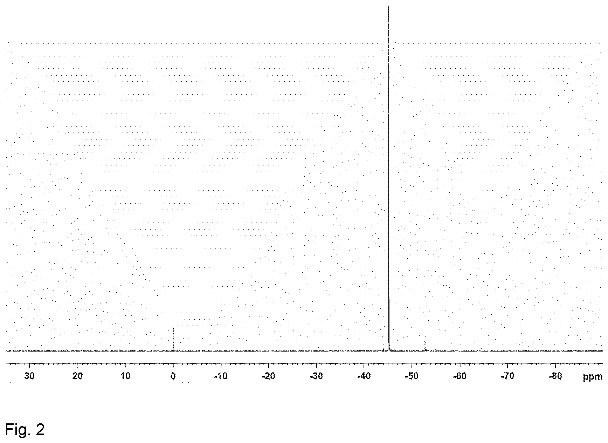

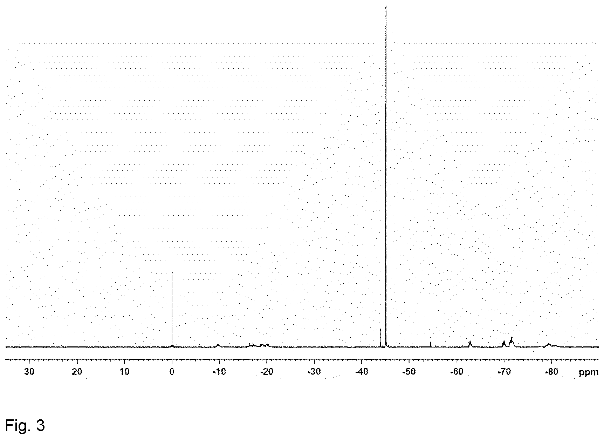

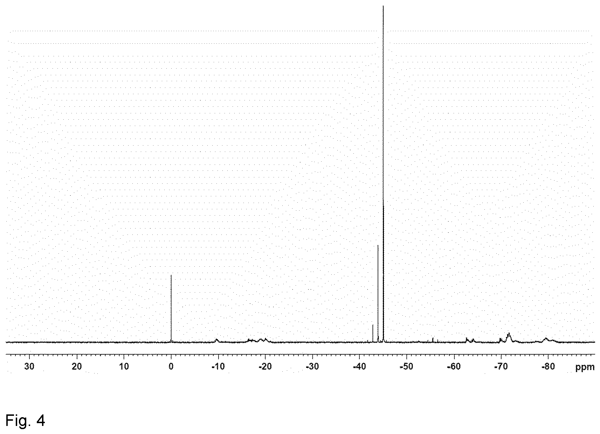

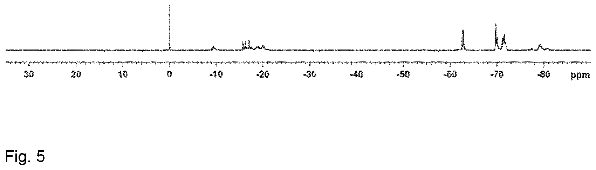

Es wurden ²⁹Si-NMR Spektren der einzelnen Mischungen gemessen, diese sind in den Fig. 1 - Fig. 4 aufgeführt. Ein weiteres ²⁹Si-NMR Spektrum der Komponente (A) ist in Fig. 5 aufgezeigt.

Fig. 1 zeigt das ²⁹Si-NMR Spektrum der VD1. Ein kleines Signal bei -53 ppm zeigt eine kleine Menge an Dimere im Rohstoff an.

Fig. 2 zeigt das ²⁹Si-NMR Spektrum der VD2 auf. Durch den Kontakt mit der Luftfeuchtigkeit konnte an der gleichen Stelle ein deutlich stärkeres Signal gemessen werden. Daraus kann geschlossen werden, dass durch die Reaktion mit dem Wasser aus der Umgebungsluft weitere Dimere gebildet haben, katalysiert durch 1,1,3,3-Tetramethylguanidin.

Fig. 3 zeigt das ²⁹Si-NMR Spektrum von D1 auf. Ein Signal bei -53 ppm konnte nicht gemessen werden. Das Signal bei -55 ppm kann dem reinen Silikonharz zugeordnet werden.

Fig. 4 zeigt das ²⁹Si-NMR Spektrum von D2 auf. Obwohl die Mischung der Luftfeuchtigkeit ausgesetzt wurde, ist auch hier kein Signal bei -53 ppm sichtbar.

Fig. 5 zeigt das ²⁹Si-NMR Spektrum von MP-Harz. Bei -55 ppm wird ein kleines Signal gemessen. Ein Signal bei -53 ppm fehlt. Das Spektrum des MP-Harzes verdeckt demnach keine der Dimere des Dynasylan AMEO zugeordneten Signale.

Es konnte mithilfe des ²⁹Si-NMR Spektrums die Stabilität der erfindungsgemäßen Härtermischung im Hinblick auf die Konzentration an Dimere des Dynasylan AMEO gezeigt werden.

### 2. Anwendungsbeispiele

### 2.1 Klarlack

Es wurde Klarlacke mit erfindungsgemäßen Härtermischungen hergestellt und deren Trocknungszeit gemessen. Zunächst wurden verschiedene Härtermischungen gemäß Tabelle 6 hergestellt. Als Komponente (C) wurde 1,1,3,3-Tetramethylguanidin verwendet. Der Klarlack wurde, gemäß der Mengenangaben aus Tabelle 7 bei 1,000 UpM für 5 Minuten mit Hilfe eines Dispermaten hergestellt. Zur Bestimmung der Trockenzeit wurde er sofort nach Herstellung auf Standardglasstreifen aufgezogen. Die Zeit zur An- und Durchtrocknung in Stunden ist ebenfalls in Tabelle 7 dargestellt.

**Tabelle 6: Härtermischungen**

| **Härtermischung** | **Komponente (A)** | **Komponente (B)** | **Menge (A) Gew.-%** | **Menge (B) Gew.-%** | **(A):(B)** | **Menge (C) Gew.-%** |
|---|---|---|---|---|---|---|
| H13 | MP-Harz | Dynasylan AMEO | 47,65 | 47,65 | 1:1 | 4,70 |
| H14 | MP-Harz | Dynasylan AMMO | 47,65 | 47,65 | 1:1 | 4,70 |
| H15 | MP-Harz | Dynasylan AMEO | 24,25 | 72,75 | 1:3 | 3,0 |
| H16 | MP-Harz | Dynasylan AMEO | 32,33 | 64,67 | 1:2 | 3,0 |
| H17 | MP-Harz | Dynasylan AMEO | 48,50 | 48,50 | 1:1 | 3,0 |
| H18 | MP-Harz | Dynasylan AMMO | 24,25 | 72,75 | 1:3 | 3,0 |
| H19 | MP-Harz | Dynasylan AMMO | 32,33 | 64,67 | 1:2 | 3,0 |
| H20 | MP-Harz | Dynasylan AMMO | 48,50 | 48,50 | 1:1 | 3,0 |

**Tabelle 7: Trocknungszeit Klarlack**

| **Lack** | **Harz** | **Härtermischung** | **Harz : Härtermischung** | **Antrockrung (h)** | **Durchtrocknung (h)** |
|---|---|---|---|---|---|
| 1 | Silikophen AC900 | H13 | 83:17 | 1 | 2 |
| 2 | Silikophen AC900 | H14 | 83:17 | 1 | 2 |
| 3 | MP-Harz | H13 | 83:17 | 2 | 5 |
| 4 | MP-Harz | H14 | 83:17 | 2 | 3 |
| 5 | MP-Harz | H15 | 80:20 | 2 | 10 |
| 6 | MP-Harz | H16 | 80:20 | 3 | 5 |
| 7 | MP-Harz | H17 | 80:20 | 3 | 4 |
| 8 | MP-Harz | H18 | 80:20 | 2 | >10 |
| 9 | MP-Harz | H19 | 80:20 | 2 | >10 |
| 10 | MP-Harz | H20 | 80:20 | 2 | 6 |
| 11 | MP-Harz | H15 | 85:15 | 3 | 8 |
| 12 | MP-Harz | H16 | 85:15 | 3 | 8 |
| 13 | MP-Harz | H17 | 85:15 | 3 | 10 |
| 14 | MP-Harz | H18 | 85:15 | 3 | 5 |
| 15 | MP-Harz | H19 | 85:15 | 3 | 7 |
| 16 | MP-Harz | H20 | 85:15 | 4 | 6 |
| 17 | MP-Harz | H15 | 90:10 | 4 | >10 |
| 18 | MP-Harz | H16 | 90:10 | 4 | >10 |
| 19 | MP-Harz | H17 | 90:10 | 4 | >10 |
| 20 | MP-Harz | H18 | 90:10 | 5 | 8 |
| 21 | MP-Harz | H19 | 90:10 | 5 | 8 |
| 22 | MP-Harz | H20 | 90:10 | 5 | >10 |

| | | | | | |
|---|---|---|---|---|---|
| Die Beispiele zeigen, dass die erfindungsgemäßen Härtermischungen zum Aushärten eines Klarlacks verwendet werden können. | | | | | |

### 2.2 Schwarzlack

Ein Schwarzlack wurde mit Hilfe eines Lau Disperser DAS 200 Gerätes und 2,2 mm Glasperlen hergestellt. Die Mengenangaben und Rohstoffe sind aus Tabelle 8 zu entnehmen.

**Tabelle 8: Zusammensetzung Schwarzlack**

| Rohstoff | Gew.-% |
|---|---|
| Silikophen AC 900 | 31,5 |
| Xylol | 16,0 |
| Bentone SD 1 | 1,0 |
| Mica TM | 17,0 |
| Heucophos ZPO | 10,0 |
| Heucodur Black 9-100 | 12,0 |
| Aerosil R972 | 1,2 |
| Plastorit Super | 9,0 |
| Butylglycolacetat | 2,3 |

Die Rohstoffe wurden der Reihe nach in 500 mL Schraubdeckelgläser eingewogen und anschließend 2 Stunden dispergiert. Abschließend wurden die Glasperlen abfiltriert. Der Schwarzlack wurde mit den erfindungsgemäßen Härtermischungen H13 und H14 im Verhältnis 5:1 abgemischt und anschließend bei 1,000 UpM mit Hilfe eines Dispermaten für 5 Minuten gerührt. Der Schwarzlack wurde zur Bestimmung der Trockenzeit sofort nach Herstellung auf Standardglasstreifen aufgezogen. Die Zeit zur An- und Durchtrocknung in Stunden ist in Tabelle 9 dargestellt.

**Tabelle 9: Trockenzeit Schwarzlack (Stunden)**

| Härter | Antrocknung | Durchtrocknung |
|---|---|---|
| H13 | 1 | 1 |
| H14 | 1 | 1 |

Das Beispiel zeigt, dass die erfindungsgemäße Härtermischungen zum Aushärten eines pigmentierten Schwarzlacks verwendet werden können.

## Patentansprüche

1. Härtermischung für raumtemperaturhärtende Beschichtungen enthaltend
(A) 10 -60 Gew.-%, bevorzugt 20 -60 Gew.-%, besonders bevorzugt 30 - 50 Gew.-% eines Polysiloxans,
(B) 40 -90 Gew.-%, bevorzugt 40 - 80 Gew.-%, besonders bevorzugt 40 - 70 Gew.-% eines aminofunktionellen Alkoxysilans und
(C) 1 - 10 Gew.-%, bevorzugt 2 - 7 Gew.-%, besonders bevorzugt 3 - 5 Gew.-% einer Guanidinverbindung,
wobei sich die Mengenangaben der Komponenten (A), (B) und (C) auf 100 Gew.-% ergänzen und sich auf die Härtermischung beziehen.

2. Härtermischung nach Anspruch 1, **dadurch gekennzeichnet, dass** das Gewichtsverhältnis von A : B von 1 : 9 bis 3 : 2 bevorzugt von 1 : 4 bis 3 : 2 und besonders bevorzugt 3 : 7 bis 3 : 2 ist.

3. Härtermischung nach einer den vorgenannten Ansprüchen, **dadurch gekennzeichnet, dass** Komponente (A) eine Verbindung der allgemeinen Formel (I) ist
RₐSi(OR')_{b}O_{(4-a-b)/2} (I)
worin a und b unabhängig voneinander größer 0 bis kleiner gleich 2 sind und die Summe von a + b kleiner 4 ist und
R unabhängig voneinander, gleich oder verschieden lineare oder verzweigte, gesättigte wie auch ein oder mehrfach ungesättigte oder aromatische Kohlenwasserstoffreste,
R' eine Alkylgruppe bestehend aus 1 bis 8 Kohlenstoffatomen ist.

4. Härtermischung nach einem der vorgenannten Ansprüchen, **dadurch gekennzeichnet, dass** es sich bei Komponente (A) um eine Verbindung der allgemeinen Formel (I) handelt, worin R Phenyl- und Methylgruppen und R' eine Methylgruppe ist.

5. Härtermischung nach Anspruch 4, **dadurch gekennzeichnet, dass** das numerische auf die Molzahl in Komponente (A) bezogene Phenyl- zu Methyl-Verhältnis in der Regel im Bereich von 1 zu 0,1 bis 0,1 zu 1, vorzugsweise im Bereich von 0,5 zu 1 bis 1 zu 0,5 liegt.

6. Härtermischung nach einem der vorgenannten Ansprüche, **dadurch gekennzeichnet, dass** Komponente (B) ein aminofunktionelles Alkoxysilan der allgemeinen Formel (II) ist
R¹₂-N-R³-SiR¹ₓ(OR²)₃₋ₓ (II)
wobei
R¹ gleich oder unabhängig voneinander Wasserstoff, eine Alkyl-, iso-Alkyl-, tert. Alkyl-, Cycloalkyl- oder Arylgruppe mit 1-10 Kohlenstoffatomen, NH₂-(CH₂)₂- oder (R²O)₃Si-R³-,
mit x = 0, 1 oder 2, und
R² unabhängig voneinander Wasserstoff, eine Alkyl- oder iso-Alkylgruppe mit 1 - 8 Kohlenstoffatomen bedeuten und
R³ eine lineare oder verzweigte Alkylengruppe mit 1 - 20 Kohlenstoffatomen ist.

7. Härtermischung nach einem der vorgenannten Ansprüche, **dadurch gekennzeichnet, dass** es sich bei Komponente (B) um 3-Aminopropyltriethoxysilan, 3-Aminopropyltrimethoxysilan, 3-Aminopropylmethyldiethoxysilan, N-(n-Butyl)-3-aminopropyltrimethoxysilan, N-(2-Aminoethyl)-3-aminopropyltrimethoxysilan, Bis[3-triethoxysilylpropyl]amine, Bis[3-Trimethoxysilylpropyl]amine oder Bis[3-trimethoxysilylpropyl-N-ethyl]amine handelt.

8. Härtermischung nach einem der vorgenannten Ansprüche, **dadurch gekennzeichnet, dass** Komponente (C) eine Guanidinverbindung der allgemeinen Formel (III) ist 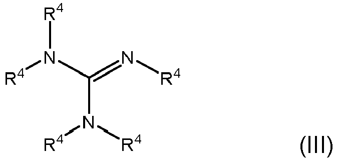 worin
R⁴ unabhängig voneinander gleich oder verschieden Wasserstoff, lineare oder verzweigte oder cyclische Kohlenwasserstoffe enthaltend 1 bis 15 Kohlenstoffatome, wobei die Kohlenwasserstoffe auch 1 oder 2 Heteroatome enthalten können. Bevorzugte Heteroatome sind Stickstoff und Sauerstoff.

9. Härtermischung nach einem der vorgenannten Ansprüche, **dadurch gekennzeichnet, dass** es sich bei Komponente (C) um 1,1,3,3-Tetramethylguanidin oder 2-tert-Butyl-1,1,3,3-Tetramethylguanidin handelt.

10. Härtermischung nach einem der vorgenannten Ansprüche, **dadurch gekennzeichnet, dass** die Viskosität gemessen nach DIN 53019 zwischen 5 - 25 mPa.s, bevorzugt zwischen 7 - 20 mPa.s, und besonders bevorzugt zwischen 8 - 15 mPa.s liegt.

11. Verfahren zur Herstellung der Härtermischung nach einem der vorgenannten Ansprüche, **dadurch gekennzeichnet, dass** die Komponenten unter Stickstoff vermischt werden.

12. Verfahren nach Anspruch 11, **dadurch gekennzeichnet, dass** Komponente A vorgelegt und unter ständigem Rühren Komponente B zugegeben wird, und anschließend Komponente C hinzugefügt wird.

13. Verwendung einer Härtermischung nach einem der Ansprüche 1 - 10 zur Härtung von härtbaren Zusammensetzungen, enthaltend mindestens ein Polymer, das silylfunktionell ist.

14. Verwendung einer Härtermischung nach einem der Ansprüche 1 - 10 zur Härtung von härtbaren Zusammensetzungen gemäß der Verbindung der allgemeinen Formel (I).

15. Beschichtungen, Lacke, Farben, Tinten, Überzüge, Dichtungsmassen, Klebstoffe erhältlich durch unter Verwendung einer Härtermischung nach einem der vorgenannten Ansprüche.

## Claims

1. Curing agent mixture for coatings that cure at room temperature, comprising
(A) 10-60% by weight, preferably 20-60% by weight, more preferably 30-50% by weight, of a polysiloxane,
(B) 40-90% by weight, preferably 40-80% by weight, more preferably 40-70% by weight, of an amino-functional alkoxysilane and
(C) 1-10% by weight, preferably 2-7% by weight, more preferably 3-5% by weight, of a guanidine compound,
wherein the stated amounts of components (A), (B) and (C) add up to 100% by weight and are based on the curing agent mixture.

2. Curing agent mixture according to Claim 1, **characterized in that** the weight ratio A:B is from 1:9 to 3:2, preferably from 1:4 to 3:2 and more preferably 3:7 to 3:2.

3. Curing agent mixture according to any of the preceding claims, **characterized in that** component (A) is a compound of the general formula (I)
RₐSi(OR')_{b}O_{(4-a-b)/2} (I)
in which a and b are independently greater than 0 to less than or equal to 2, and the sum a + b is less than 4, and
R is independently identical or different linear or branched, saturated or else mono- or polyunsaturated or aromatic hydrocarbon radicals,
R' is an alkyl group consisting of 1 to 8 carbon atoms.

4. Curing agent mixture according to any of the preceding claims, **characterized in that** component (A) is a compound of the general formula (I), where R is phenyl and methyl groups and R' is a methyl group.

5. Curing agent mixture according to Claim 4, **characterized in that** the numerical phenyl to methyl ratio, based on the number of moles in component (A), is generally in the range from 1:0.1 to 0.1:1, preferably in the range from 0.5:1 to 1:0.5.

6. Curing agent mixture according to any of the preceding claims, **characterized in that** component (B) is an amino-functional alkoxysilane of the general formula (II)
R¹₂-N-R³-SiR¹ₓ(OR²)₃₋ₓ (II)
where
R¹ is identically or independently hydrogen, an alkyl, isoalkyl, tert-alkyl, cycloalkyl or aryl group having 1-10 carbon atoms, NH₂-(CH₂)₂- or (R²O)₃Si-R³-,
where x = 0, 1 or 2, and
R² is independently hydrogen, an alkyl or isoalkyl group having 1-8 carbon atoms, and
R³ is a linear or branched alkylene group having 1 - 20 carbon atoms.

7. Curing agent mixture according to any of the preceding claims, **characterized in that** component (B) is 3-aminopropyltriethoxysilane, 3-aminopropyltrimethoxysilane, 3-aminopropylmethyldiethoxysilane, N-(n-butyl)-3-aminopropyltrimethoxysilane, N-(2-aminoethyl)-3-aminopropyltrimethoxysilane, bis[3-triethoxysilylpropyl]amine, bis[3-trimethoxysilylpropyl]amine or bis[3-trimethoxysilylpropyl-N-ethyl]amine.

8. Curing agent mixture according to any of the preceding claims, **characterized in that** component (C) is a guanidine compound of the general formula (III) 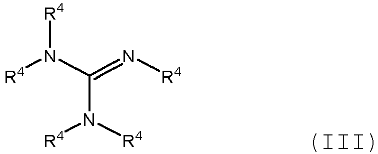 in which
R⁴ is independently identical or different and is hydrogen, linear or branched or cyclic hydrocarbons comprising 1 to 15 carbon atoms, wherein the hydrocarbons may also comprise 1 or 2 heteroatoms. Preferred heteroatoms are nitrogen and oxygen.

9. Curing agent mixture according to any of the preceding claims, **characterized in that** component (C) is 1,1,3,3-tetramethylguanidine or 2-tert-butyl-1,1,3,3-tetramethylguanidine.

10. Curing agent mixture according to any of the preceding claims, **characterized in that** the viscosity measured in accordance with DIN 53019 is between 5-25 mPa.s, preferably between 7 - 20 mPa.s, and more preferably between 8 - 15 mPa.s.

11. Method for producing the curing agent mixture according to any of the preceding claims, **characterized in that** the components are mixed under nitrogen.

12. Method according to Claim 11, **characterized in that** component A is initially charged, with component B then being added with constant stirring, followed by the addition of component C.

13. Use of a curing agent mixture according to any of Claims 1-10 for curing curable compositions comprising at least one polymer that is silyl-functional.

14. Use of a curing agent mixture according to any of Claims 1-10 for curing curable compositions in accordance with the compound of the general formula (I).

15. Coatings, lacquers, paints, inks, coverings, sealants, adhesives, obtainable through the use of a curing agent mixture according to any of the preceding claims.

## Revendications

1. Mélange de durcisseur pour revêtements durcissant à température ambiante, contenant
(A) 10-60 % en poids, de préférence 20-60 % en poids, de manière particulièrement préférée 30-50 % en poids d'un polysiloxane,
(B) 40-90 % en poids, de préférence 40-80 % en poids, de manière particulièrement préférée 40-70 % en poids d'un alcoxysilane à fonctionnalité amino et
(C) 1-10 % en poids, de préférence 2-7 % en poids, de manière particulièrement préférée 3-5 % en poids d'un composé de guanidine,
les indications de quantité des composants (A), (B) et (C) se complétant à 100 % en poids et se rapportant au mélange de durcisseur.

2. Mélange de durcisseur selon la revendication 1, **caractérisé en ce que** le rapport pondéral de A:B vaut 1:9 à 3:2, de préférence 1:4 à 3:2 et de manière particulièrement préférée 3:7 à 3:2.

3. Mélange de durcisseur selon l'une quelconque des revendications susmentionnées, **caractérisé en ce que** le composant (A) est un composé de formule générale (I)
RₐSi(OR')_{b}O_{(4-a-b)/2} (I)
dans laquelle
a et b indépendamment l'un de l'autre, sont supérieurs à 0 jusqu'à inférieur ou égal à 2 et la somme de a + b est inférieure à 4 et
R représente, indépendamment, de manière identique ou différente, des radicaux hydrocarbonés linéaires ou ramifiés, saturés ainsi que monoinsaturés ou polyinsaturés ou aromatiques,
R' représente un groupe alkyle constitué par 1 à 8 atomes de carbone.

4. Mélange de durcisseur selon l'une quelconque des revendications susmentionnées, **caractérisé en ce qu'**il s'agit, pour le composant (A), d'un composé de formule générale (I), dans laquelle R représente des groupes phényle et méthyle et R' représente un groupe méthyle.

5. Mélange de durcisseur selon la revendication 4, **caractérisé en ce que** le rapport numérique phényle à méthyle, se rapportant au nombre de moles dans le composant (A), se situe généralement dans la plage de 1:0,1 à 0,1:1, de préférence dans la plage de 0,5:1 à 1:0,5.

6. Mélange de durcisseur selon l'une quelconque des revendications susmentionnées, **caractérisé en ce que** le composant (B) est un alcoxysilane à fonctionnalité amino de formule générale (II)
R¹₂-N-R³-SiR¹ₓ(OR²)₃₋ₓ (II)
dans laquelle
R¹ signifie de manière identique ou indépendamment, hydrogène, un groupe alkyle, iso-alkyle, tert-alkyle, cycloalkyle ou aryle comprenant 1-10 atomes de carbone, NH₂-(CH₂)₂- ou (R²O)₃Si-R³-,
x = 0, 1, ou 2 et
R² signifie, indépendamment, hydrogène, un groupe alkyle ou iso-alkyle comprenant 1-8 atomes de carbone et
R³ représente un groupe alkylène linéaire ou ramifié comprenant 1 - 20 atomes de carbone.

7. Mélange de durcisseur selon l'une quelconque des revendications susmentionnées, **caractérisé en ce qu'**il s'agit, pour le composant (B), de 3-aminopropyltriéthoxysilane, de 3-aminopropyltriméthoxysilane, de 3-aminopropylméthyldiéthoxysilane, de N-(n-butyl)-3-aminopropyltriméthoxysilane, de N-(2-aminoéthyl)-3-aminopropyltriméthoxysilane, de bis[3-triéthoxysilylpropyl]amine, de bis[3-triméthoxysilylpropyl]amine ou de bis[3-triméthoxysilylpropyl-N-éthyl] amine.

8. Mélange de durcisseur selon l'une quelconque des revendications susmentionnées, **caractérisé en ce que** le composant (C) est un composé de guanidine de formule générale (III) 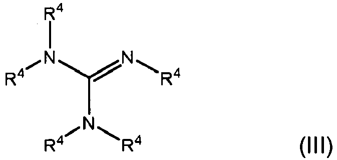 dans laquelle
R⁴ représente, indépendamment, de manière identique ou différente, hydrogène, des hydrocarbures linéaires ou ramifiés ou cycliques contenant 1 à 15 atomes de carbone, les hydrocarbures pouvant également contenir 1 ou 2 hétéroatomes, des hétéroatomes préférés étant l'azote, l'oxygène et le soufre.

9. Mélange de durcisseur selon l'une quelconque des revendications susmentionnées, **caractérisé en ce qu'**il s'agit, pour le composant (C), de 1,1,3,3-tétraméthylguanidine ou de 2-tert-butyl-1,1,3,3-tétraméthylguanidine.

10. Mélange de durcisseur selon l'une quelconque des revendications susmentionnées, **caractérisé en ce que** la viscosité, mesurée selon la norme DIN 53019, se situe entre 5-25 mPa.s, de préférence entre 7 - 20 mPa.s et de manière particulièrement préférée entre 8 - 15 mPa.s.

11. Procédé pour la préparation du mélange de durcisseur selon l'une quelconque des revendications susmentionnées, **caractérisé en ce que** les composants sont mélangés sous azote.

12. Procédé selon la revendication 11, **caractérisé en ce que** le composant A est disposé au préalable et le composant B est ajouté sous agitation constante et ensuite, le composant C est ajouté.

13. Utilisation d'un mélange de durcisseur selon l'une quelconque des revendications 1 à 10 pour le durcissement de compositions durcissables, contenant au moins un polymère qui présente une fonctionnalité silyle.

14. Utilisation d'un mélange de durcisseur selon l'une quelconque des revendications 1 à 10 pour le durcissement de compositions durcissables selon le composé de formule générale (I).

15. Revêtements, vernis, peintures, encres, recouvrements, masses d'étanchéité, adhésifs pouvant être obtenus à l'aide d'un mélange de durcisseur selon l'une quelconque des revendications susmentionnées.
